**Europäisches Patentamt**

**European Patent Office**

**Office européen des brevets**

(11) Numéro de publication : **0 359 769 B1**

(12) **FASCICULE DE BREVET EUROPEEN**

(45) Date de publication du fascicule du brevet :
**29.01.92 Bulletin 92/05**

(21) Numéro de dépôt : **88904546.4**

(22) Date de dépôt : **11.05.88**

(86) Numéro de dépôt international :
**PCT/FR88/00231**

(87) Numéro de publication internationale :
**WO 88/09416 01.12.88 Gazette 88/26**

(51) Int. Cl.⁵ : **E04C 2/40,** E04C 2/32,
B64C 1/00, B32B 3/20

(54) **PRODUIT MODULAIRE INTERMEDIAIRE POUR LA FABRICATION D'UN MATERIAU ALVEOLAIRE, PROCEDE ET DISPOSITIF DE FABRICATION DUDIT PRODUIT, APPLICATION A L'OBTENTION D'UN MATERIAU ALVEOLAIRE.**

(30) Priorité : **26.05.87 FR 8707440**

(43) Date de publication de la demande :
**28.03.90 Bulletin 90/13**

(45) Mention de la délivrance du brevet :
**29.01.92 Bulletin 92/05**

(84) Etats contractants désignés :
**AT BE CH DE FR GB IT LI LU NL SE**

(56) Documents cités :
**FR-A- 2 164 922
FR-A- 2 354 196
FR-A- 2 585 445
GB-A- 1 070 874**

(73) Titulaire : **UNIVERSITE PAUL SABATIER
(TOULOUSE III)
118 Route de Narbonne
F-31062 Toulouse Cédex (FR)
Titulaire : S.A. ATECA
Verlhaguet
F-82000 Montauban (FR)**

(72) Inventeur : **ROUSSET, Abel
16, rue Jean-Moulin
F-31520 Ramonville (FR)
Inventeur : BONINO, Jean-Pierre
84,av.Saint-Exupéry
F-31400 Toulouse (FR)
Inventeur : BLOTTIERE, Yves
Verlhaghet
F-82000 Montauban (FR)
Inventeur : ROSSIGNOL, Claude
Lestrade
F-82170 Bressols (FR)**

(74) Mandataire : **Barre, Philippe
Cabinet Barre-Gatti-Laforgue 95 rue des
Amidonniers
F-31069 Toulouse Cédex (FR)**

Jouve, 18, rue Saint-Denis, 75001 PARIS

## Description

L'invention concerne un produit modulaire intermédiaire pour la fabrication d'un matériau alvéolaire. Elle vise à permettre de maîtriser la fabrication industrielle d'un matériau alvéolaire volumique de forme quelconque prédéterminée, bénéficiant de caractéristiques adaptées aux applications envisagées : faible poids spécifique, bonnes caractéristiques mécaniques, bonne isotropie. L'invention s'étend à un procédé de fabrication dudit produit modulaire intermédiaire, à des dispositifs destinés à cette fabrication et, en tant qu'application, à un procédé de mise en oeuvre en vue d'obtenir le matériau alvéolaire final ainsi qu'au matériau obtenu en tant que tel.

L'invention est utilisable dans des secteurs techniques très diversifiés, et en particulier dans le secteur aérospatial ou dans celui des transports aériens ou terrestres où l'on recherche de bonnes caractéristiques mécaniques combinées à un faible poids spécifique.

On connaît des matériaux alvéolaires volumiques formés par un ensemble de billes définitivement fixées les unes aux autres. On pourra notamment se reporter aux brevets suivants qui visent de tels matériaux : brevet GB n° 1 070 874, brevet US n° 3 608 010, brevet FR n° 2 164 922. Toutefois, dans ces matériaux volumiques, les billes sont disposées en vrac les unes par rapport aux autres et les procédés de fabrication évoqués dans ces brevets ne permettent pas d'obtenir une stricte périodicité tridimensionnelle dans la répartition des billes.

Pour obtenir une sensible amélioration des caractéristiques du matériau alvéolaire, la demande de brevet FR n° 85.11748 aux noms des demandeurs décrit un procédé et un matériau, dans lesquels les billes sont agencées selon une stricte répartition de type cristallographique, ce qui modifie totalement les propriétés du matériau et, en particulier, améliore considérablement ses propriétés mécaniques dans un rapport inattendu. Toutefois, le procédé visé exige un positionnement rigoureux des billes.

La présente invention se propose de faciliter sur le plan industriel la fabrication d'un tel matériau alvéolaire et de permettre de mieux en contrôler la répartition tridimensionnelle afin de garantir une stricte périodicité de type cristallographique.

Un autre objectif de l'invention est de diversifier les types de répartitions cristallographiques susceptibles d'être réalisés, afin de permettre de répondre à des cahiers de charge plus variés : large plage possible des taux de vide, possibilité d'obtenir des agencements différents de ces vides, aptitude à supporter des états de contrainte très diversifiés...

A cet effet, le procédé conforme à l'invention pour fabriquer un matériau alvéolaire consiste :

. à utiliser des produits intermédiaires constitués chacun par une nappe déformable de billes de diamètres sensiblement égaux, géométriquement agencées selon un arrangement plan à une seule couche de type cristallographique présentant une maille élémentaire en forme de triangle équilatéral, de carré ou de losange, où chaque bille courante au coeur de la nappe est en contact avec 6 ou 4 billes contiguës, lesdites billes étant liées les unes aux autres au voisinage de leurs zones de contact par des ménisques formés d'un liant souple adhérant aux billes et conférant à la nappe à la fois une cohésion d'ensemble et un caractère déformable stable, de façon à permettre de petits déplacements des billes les unes par rapport aux autres sans séparation de celles-ci,

. à appliquer une première nappe déformable sur une forme fonction du matériau alvéolaire à obtenir de façon à amener la nappe à épouser ladite forme,

. à appliquer sur ladite première nappe une deuxième nappe déformable de façon à mettre en contact les billes de ladite deuxième nappe avec celles de la première nappe et, le cas échéant, à superposer, de façon analogue, d'autres nappes déformables pour obtenir un arrangement volumique de type cristallographique des billes des diverses nappes,

. et à fixer entre elles les billes en contact des nappes contiguës.

Par "diamètres sensiblement égaux", on entend des diamètres variant au plus d'environ ∓ 2 % par rapport au diamètre nominal.

Ainsi, l'industriel utilise, pour réaliser le matériau alvéolaire volumique, des produits modulaires intermédiaires qui se présentent en nappes déformables, sortes de "tissu modulaire déformable", aptes à épouser des surfaces de toute forme par le jeu de la souplesse des ménisques ; dans ces nappes, les billes possèdent un arrangement plan parfaitement défini sur le plan géométrique : arrangement plan de type cristallographique à maille élémentaire en forme de triangle équilatéral, où chaque bille courante au coeur de la nappe est en contact avec 6 billes contiguës, arrangement plan de type cristallographique à maille élémentaire en forme de carré ou de losange, où chaque bille courante au coeur de la nappe est en contact avec 4 billes contiguës.

Selon les caractéristiques souhaitées ou matériau alvéolaire final, les produits modulaires seront superposés de façon à obtenir un arrangement volumique de type cristallographique prédéterminé : hexagonal simple, hexagonal compact, cubique simple, cubique centré, cubique face centrée.

On peut ainsi choisir les propriétés de résistance et le taux de vide du matériau alvéolaire final (le taux de vide variant de 26 % à 48 % pour ces divers types d'arrangement lorsque les alvéoles entre les billes sont vides).

Par ailleurs, le liant souple prévu dans le produit modulaire intermédiaire est de préférence un liant possédant des propriétés plastiques, afin que le produit modulaire soit apte à un préformage satisfaisant en l'absence de comportement élastique.

La fixation définitive entre billes d'une nappe donnée et entre billes au contact de nappes contiguës peut être réalisé par divers moyens.

Dans un premier mode de réalisation, le produit modulaire intermédiaire possède comme liant souple un composé sublimable à chaud. Les diverses nappes sont alors mises en place dans un moule apte à maintenir les billes selon l'arrangement volumique de type cristallographique prévu, et le liant est sublimé par chauffage. Le produit de fixation définitive (brasure, colle, matrice) qui est alors rapporté, peut être mis en place soit au cours de l'empilement des nappes, soit au terme de celui-ci. De tels produits modulaires permettent en particulier d'alléger des pièces métalliques, la fixation entre billes étant réalisée, après superposition de nappes et sublimation du liant, par coulage du métal à l'état de fusion.

Dans un autre mode de réalisation, le produit modulaire intermédiaire possède comme liant souple un mélange d'un composé sublimable à chaud et d'une poudre de brasage. Dans ce cas, l'on superpose les divers produits modulaires avec interposition d'un produit de brasage entre nappes, et l'on soumet l'empilement à un traitement thermique apte à engendrer la sublimation du composé sublimable et la fusion de la poudre et du produit de brasage. Dans le matériau alvéolaire final, les billes sont alors brasées les unes aux autres, d'une part, au sein de chaque nappe, d'autre part, entre nappes contiguës.

Dans un autre mode de réalisation, le produit modulaire intermédiaire possède comme liant souple un composé soluble dans un solvant, chaque bille possédant alors une couche superficielle en un matériau de brasage (obtenue par dépôt lors de la fabrication des billes). Dans ce cas, l'on superpose les produits modulaires, et l'on soumet l'empilement à l'action d'un solvant pour dissoudre le liant puis à un traitement thermique apte à engendrer la fusion du matériau de brasage.

Dans un autre mode de réalisation, le produit modulaire intermédiaire possède comme liant souple une résine polymérisable à chaud. Avant polymérisation, cette résine se trouve à l'état non polymérisé ou partiellement polymérisé, avec une consistance adaptée pour assurer la cohésion d'ensemble de la nappe. Le procédé de fabrication du matériau alvéolaire final consiste dans ce cas à superposer les divers produits modulaires avec interposition d'un liant de même nature entre nappes, et à soumettre l'empilement à un traitement thermique apte à engendrer la polymérisation du liant.

Les billes à partir desquelles est réalisé le produit modulaire intermédiaire conforme à l'invention peuvent être préalablement fabriquées par tout procédé et notamment par le procédé visé dans la demande de brevet FR n°85.11747 aux noms des demandeurs. Chaque bille peut en particulier comprendre une peau continue autoporteuse formée d'au moins une couche en un matériau du groupe suivant : métal, alliage métallique, céramique, matière synthétique ou matériau composite, la nature du matériau étant choisie en fonction de l'application. Le cas échéant, plusieurs types de billes de même diamètre peuvent être prévus dans chaque nappe. Ces billes peuvent être pleines ou creuses ; dans la plupart des applications, on utilisera de préférence des billes creuses afin de réduire le poids spécifique du matériau final obtenu, le diamètre externe des billes étant compris entre 0,1 mm et 20 mm.

De plus, la nappe de billes est généralement continue, c'est-à-dire sans zone dépourvue de billes ; toutefois, dans certaines applications, en particulier pour fabriquer un matériau alvéolaire final doté d'inserts, la nappe de chaque produit modulaire sera prévue avec à coeur au moins une zone vide dépourvue de billes. Lors de la fabrication du matériau alvéolaire, les produits modulaires sont alors disposés les uns sur les autres de façon à superposer leur zone vide et l'on inclut dans celles-ci un insert de forme correspondant au volume vacant afin de le disposer au contact des billes situées en bordure dudit volume, ledit insert et lesdites billes étant ensuite fixées par leurs zones de contact (par brasage, polymérisation du liant ou tout autre moyen).

En outre, pour autoriser une découpe facile des produits modulaires intermédiaires à la forme du matériau alvéolaire à obtenir, on peut utiliser des produits modulaires intermédiaires dont le liant est soluble dans un solvant. Il est alors facile de découper préalablement chaque produit à la forme appropriée en projetant sur la nappe du produit modulaire un jet directionnel de solvant suivant un contour approprié et en détachant les portions de nappe au niveau des ménisques ainsi liquéfiés.

Par ailleurs, pour pouvoir être stocké et transporté dans de bonnes conditions, le produit modulaire intermédiaire conforme à l'invention est avantageusement doté sur chaque face de sa nappe d'une feuille pelable de protection appliquée sur ladite face. Ces feuilles qui peuvent être à surface adhésive sont enlevées lors de l'utilisation du produit.

L'invention s'étend à des produits modulaires en nappe tels que définis précédemment, qui peuvent en particulier être conditionnés en empilement, soit par superposition plane des produits, soit par enroulement de ceux-ci en spires. Lors de la fabrication du matériau alvéolaire, les nappes seront séparées, avec retrait éventuel des feuilles de protection.

L'invention vise un procédé de fabrication du produit modulaire sus-évoqué et des moyens de mise en oeuvre de ce procédé. Ledit procédé consiste à utiliser des billes de diamètres sensiblement égaux et se caractérise en ce que :

– l'on positionne lesdites billes en une seule couche sur un plateau doté d'un maillage adapté pour leur imposer un arrangement géométrique de type cristallographique, présentant une maille élémentaire en forme de triangle équilatéral, de carré ou de losange, où chaque bille au coeur de la couche est en contact avec 6 ou 4 billes contiguës,

– l'on dépose sur lesdites billes un liant se trouvant dans un état initial liquide, apte à évoluer entre :

. ledit état initial liquide, de viscosité et de mouillabilité à l'égard des billes lui permettant de s'écouler sur celles-ci et se fixer dans les zones de contact entre billes pour former des ménisques,

. et un état intermédiaire souple, possédant des propriétés d'adhérence à l'égard des billes,

– après formation des ménisques liquides entre billes en contact, à faire évoluer le liant de son état initial vers son état intermédiaire de façon à former des contiguës,

– l'on dépose sur lesdites billes un liant se trouvant dans un état initial liquide, apte à évoluer entre :

. ledit état initial liquide, de viscosité et de mouillabilité à l'égard des billes lui permettant de s'écouler sur celles-ci et se fixer dans les zones de contact entre billes pour former des ménisques,

. et un état intermédiaire souple, possédant des propriétés d'adhérence à l'égard des billes,

– après formation des ménisques liquides entre billes en contact, à faire évoluer le liant de son état initial vers son état intermédiaire de façon à former des ménisques souples, adhérant auxdites billes.

Le liant peut être déposé sur les billes par tout moyen : application par projection sur les billes, application à la seringue dans les interstices entre billes, application par enduction... Le liant liquide dans son état initial s'écoule vers les zones de contact entre billes et, par le jeu des forces capillaires, se stabilise au niveau de celles-ci, avant d'être amené dans son état intermédiaire souple, où il assure la cohésion d'ensemble de la nappe. On obtient de bons résultats en choisissant un liant possédant :

– un état initial liquide de viscosité comprise entre 4 et 400 centipoises et de mouillabilité à l'égard des billes correspondant à un angle de contact compris entre 30° et 60°,

– un état intermédiaire souple plastique, apte à développer des forces d'adhérence à l'égard des billes comprises entre 1 et 10 décaNewtons par cm$^2$.

Selon un mode de mise en oeuvre, l'on dépose un liant constitué, dans son état initial, par un mélange liquide de solvant volatile, de composé sublimable à chaud et de poudre de brasage, et après formation des ménisques, l'on assure l'évaporation du solvant à faible température de façon à obtenir, dans l'état intermédiaire du liant, des ménisques souples plastiques, aptes à évoluer par traitement thermique ultérieur vers un état final rigide.

Par ailleurs, le maillage du plateau est adapté au type d'arrangement plan que l'on veut obtenir : de préférence maillage linéaire de bordure pour obtenir un produit à arrangement plan de type cristallographique à maille élémentaire triangulaire équilatérale ou en forme de losange ; maillage de surface à réseau approprié pour obtenir un produit à arrangement plan de type cristallographique à maille élémentaire carrée.

Les dispositifs de mise en oeuvre d'un tel procédé se caractérisent en ce qu'ils comprennent un plateau doté, soit le long d'un côté, d'un maillage linéaire de bordure, apte à positionner une ligne de billes selon une répartition linéaire prédéterminée, soit sur sa surface, d'un maillage formant un réseau de surface, apte à positionner une nappe de billes selon une répartition plane prédéterminée.

Le produit modulaire intermédiaire conforme à l'invention, ses procédé et dispositif de fabrication, le matériau alvéolaire final réalisé à partir de celui-ci et son procédé de fabrication sont illustrés dans les exemples qui suivent, en référence aux dessins annexés ; sur ces dessins qui font partie intégrante de la présente description :

– les figures 1, 2, 3, 4, 5, 6, 7 et 8 qui concernent l'exemple 1 sont respectivement (figure 1) une vue partielle en plan d'un produit modulaire intermédiaire, (figures 2 et 3) des vues en coupe AA' et en plan d'un plateau de fabrication, (figures 4, 5, 6, 7 et 8) des schémas en coupe BB', CC' et en plan illustrant les étapes de fabrication du produit modulaire,

– les figures 9, 10, 11 et 12 qui concernent l'exemple 2 sont respectivement (figure 9) une vue en plan d'un autre mode de réalisation de produit modulaire, (figures 10 et 11) des vues en coupe EE' et en plan du plateau de fabrication correspondant, (figure 12) un schéma illustrant la fabrication,

– les figures 13 et 14 qui concernent l'exemple 3 sont respectivement une vue en plan d'un autre mode de réalisation de produit modulaire et une vue partielle en plan du plateau de fabrication correspondant,

– les figures 15, 16, 17 et 18 qui concernent l'exemple 4 sont respectivement (figures 15 et 16) des schémas illustrant le procédé de fabrication de matériau alvéolaire à partir de produits modulaires, (figure 17) une vue en perspective (selon le détail F) du matériau alvéolaire obtenu, et (figure 18) un schéma illustrant l'agencement volumique des billes,

– les figures 19 et 20 qui concernent l'exemple 5 illustrent un autre type de matériau alvéolaire,

– les figures 21 et 22 qui concernent l'exemple 6 illustrent un autre type de matériau alvéolaire,

– la figure 23 qui concerne l'exemple 7 illustre, vus en coupe, des produits modulaires intermédiaires conditionnés en empilement.

## EXEMPLE 1

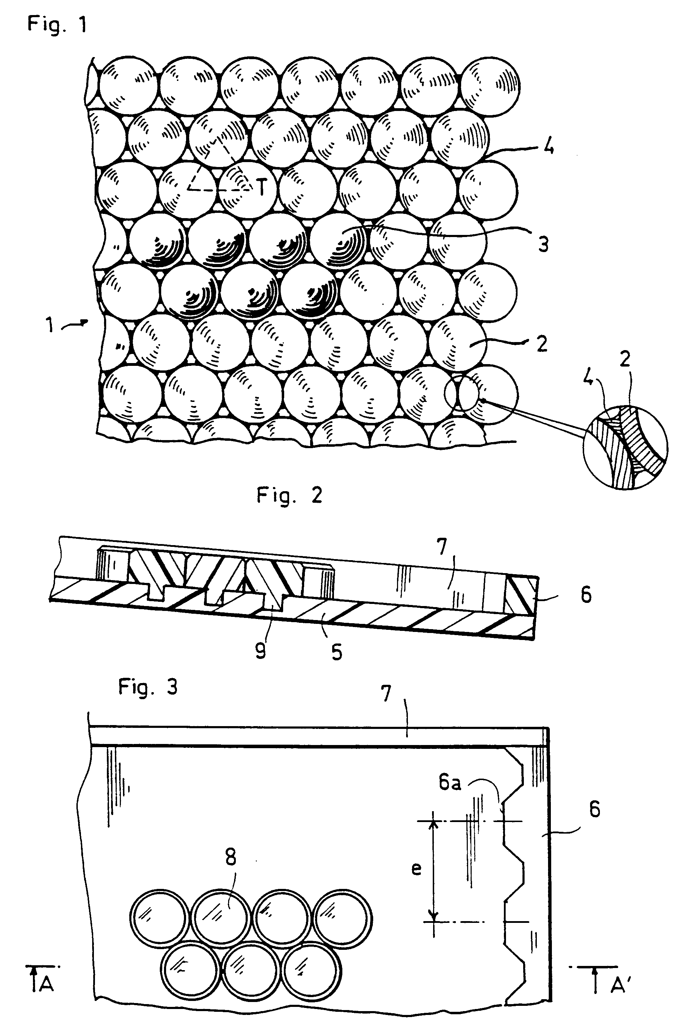

Le produit modulaire visé à cet exemple et illustré en plan à la figure 1 est constitué par une nappe 1 de billes ayant des diamètres égaux. En cet exemple, les billes sont sélectionnées pour posséder un diamètre égal à 6 mm à ∓ 0,2 % près.

Cette nappe monocouche est pourvue de deux types de billes : une majorité de billes creuses 2 en céramique-métal ("cermet") et quelques billes creuses 3 en nickel au coeur de la nappe. Ces billes sont chacune constituées d'une peau continue autoporteuse d'épaisseur de l'ordre de 100 microns et d'un volume vide interne ; elles peuvent notamment être fabriquées par le procédé décrit dans la demande FR 85.11747.

Ces billes sont agencées selon un arrangement plan de type cristallographique à maille élémentaire en forme de triangle équilatéral (T). Chaque bille courante au coeur de la nappe est aussi en contact avec six billes contiguës. Ces billes sont liées entre elles au niveau de leurs zones de contact par des ménisques 4 constitués d'un liant souple plastique adhérant aux billes. En l'exemple, ce liant est un mélange d'un composé sublimable à chaud formé par le produit "Nicrobraz 300R" fabriqué par "WAL-COLMONOY" et d'une poudre de brasage base nickel "référence LM" fabriquée par la même société.

Dans son état initial, le produit "Nicrobraz 300R" contient un solvant et des plastifiants sublimables à chaud. Le mélange de ce produit dans son état initial et de la poudre de brasage possède une viscosité de l'ordre de 200 centipoises et une bonne mouillabilité à l'égard des billes avec un effet de capillarité sensible (angle de contact de l'ordre de 40°).

En quelques minutes de ventilation (30° à 40° C), le solvant du mélange s'évapore et fournit un mélange plastifiant/poudre de brasage présentant un état intermédiaire souple plastique, assurant la liaison entre billes. Les forces d'adhérence à l'égard des billes sont de l'ordre de 3 décaNewtons par cm². 

La nappe de billes présente ainsi, à la fois, une bonne cohésion d'ensemble et un caractère déformable.

Il est à noter que le plastifiant sus-évoqué est soluble dans l'acétone et peut être localement dissous par un jet de solvant pour découper lors de l'utilisation la nappe suivant un contour désiré.

Un tel produit modulaire intermédiaire est destiné à la fabrication de matériau alvéolaire à faible conduction thermique d'ensemble, avec un canal d'évacuation des calories au niveau des billes en nickel 3. Un exemple de fabrication d'un tel matériau alvéolaire est fourni plus loin.

Les figures 2 à 8 illustrent le procédé de fabrication du produit modulaire intermédiaire ci-dessus décrit.

Cette fabrication s'effectue au moyen d'un dispositif tel que représenté partiellement aux figures 2 et 3, comprenant un plateau 5 doté, le long d'un côté, d'un maillage linéaire de bordure constitué en l'exemple par une réglette 6 comportant une ligne de plots de positionnement tels que 6a. Ces plots sont agencés selon la périodicité directionnelle de l'arrangement triangulaire équilatéral concerné. Ils sont distants les uns des autres d'une valeur e égale à deux fois la hauteur du triangle équilatéral formant la maille de l'arrangement e : 1,73 D (où D est le diamètre des billes). En l'exemple, e est pris égal à 10,4 mm.

Le plateau 5 est légèrement incliné vers la réglette 6 (angle de l'ordre de 3°). Il est également incliné d'un angle plus faible (1°) vers une bordure 7 adjacente à cette réglette. Des bordures rectilignes telles que 7 le long des autres côtés contribuent à guider les billes lors de la fabrication.

En outre, le plateau 5 est pourvu d'une zone en relief, formée en l'exemple par des pions magnétiques tels que 8. Ces pions de forme cylindrique sont amovibles et possèdent des tétons de centrage 9 qui viennent se loger dans des points de centre de plateau. Les pions 8 peuvent ainsi être retirés au moyen d'un aimant de façon à escamoter la zone en relief du plateau. Cette zone correspond à la forme de l'ensemble des billes de nickel qui doivent être disposées au coeur de la nappe.

Le plateau est réalisé en un matériau antiadhérent vis-à-vis du liant ("PTFE"). Les pions 8 sont également réalisés en un matériau antiadhérent de ce type, avec une pastille magnétique insérée en vue de leur retrait.

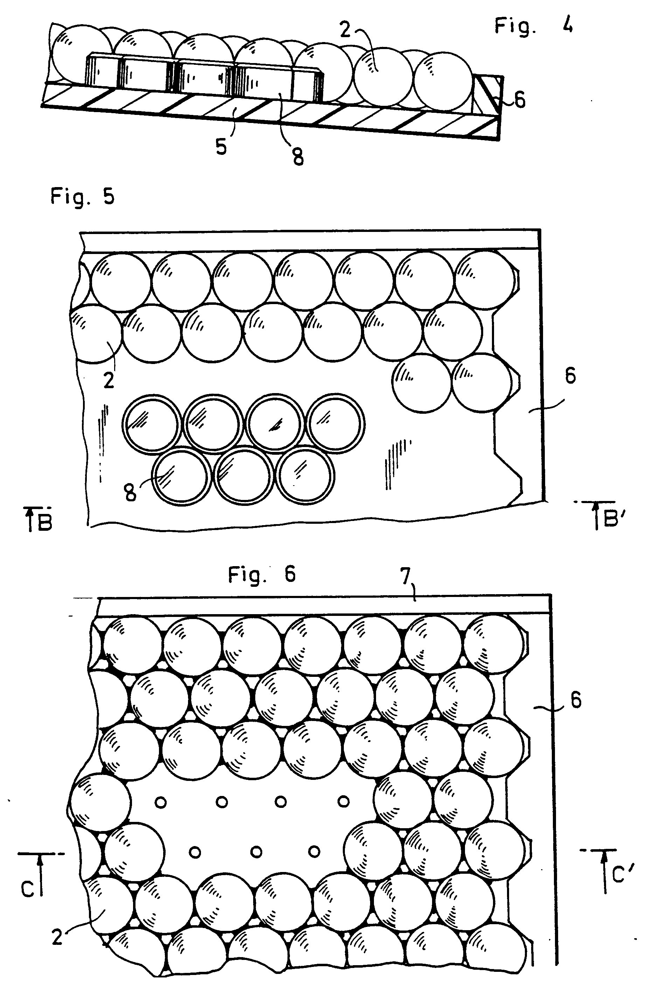

Les figure 4 et 5 illustrent la mise en place des billes 2 en cermet. Un distributeur de billes (de type connu en soi) se déplace au-dessus du plateau afin de distribuer les billes en ligne. Le plateau est animé d'un mouvement de vibration et les billes s'organisent à partir de la réglette 6 suivant l'arrangement à maille élémentaire triangulaire équilatéral. Cet arrangement se développe depuis la réglette 6 vers le centre du plateau, assurant une périodicité bidimensionnelle stricte des billes. La zone pleine en relief formée par les pions 8 occupe la place de billes selon l'arrangement précité et s'intègre naturellement dans l'agencement périodique sans introduire de dislocation (ce processus est une reconstitution macroscopique de la génèse d'une cristallisation à maille élémentaire triangulaire équilatérale).

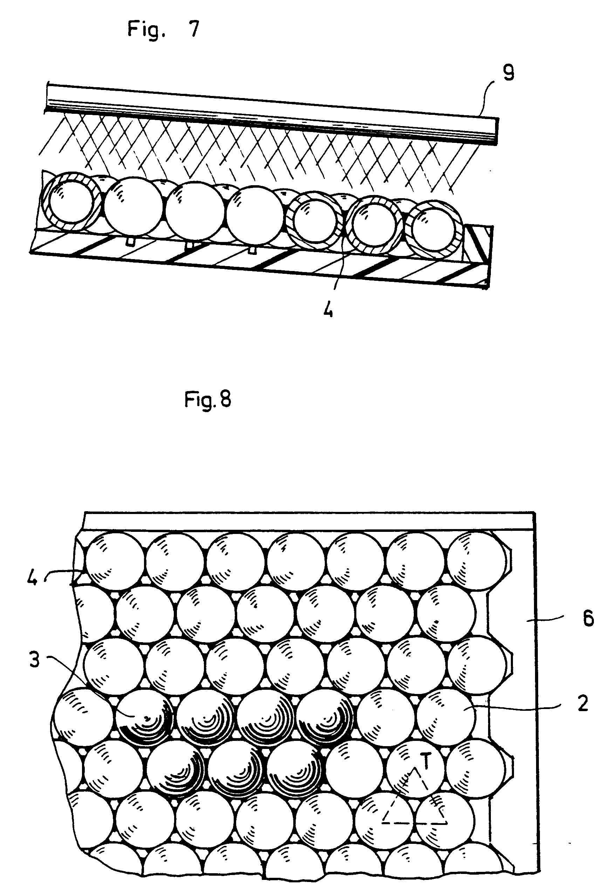

Une fois le plateau couvert de billes 2, l'on projette sur lesdites billes le liant précité dans son état initial liquide (présence d'un solvant dans le plastifiant). Une rampe de pulvérisation telle que représentée en 9 à la figure 7 peut litre utilisée à cet effet. Le liant dans son état initial mouille les billes et s'écoule vers les zones de contact entre celles-ci, où il forme un ménisque 4 par effet de capillarité. Après formation des ménisques, le liant est amené vers son état intermédiaire plastique, en particulier au moyen d'une ventilation à température modérée (30° à 40° C) qui engendre l'évaporation du solvant. Les ménisques 4 adhérents aux billes 2 prennent alors un caractère plastique qui assure la cohésion de celles-ci.

La figure 6 illustre en plan les billes 2 en place sur le plateau 5, après retrait des pions 8 (escamotage de la zone en relief du plateau).

Les billes en nickel 3 sont alors mises en place dans la zone vide dépourvue de billes suivant le mime processus que précédemment. Leur arrangement est déterminé par les billes 2 adjacentes.

L'on dépose à nouveau du liant dans son état initial sur les billes 3 ainsi nouvellement positionnées et l'on amène celui-ci à évoluer vers son état intermédiaire (figure 8).

Comme on le verra plus loin, les nappes ainsi fabriquées peuvent être protégées par des films protecteurs et empilées pour être stockées et transportées.

EXEMPLE 2

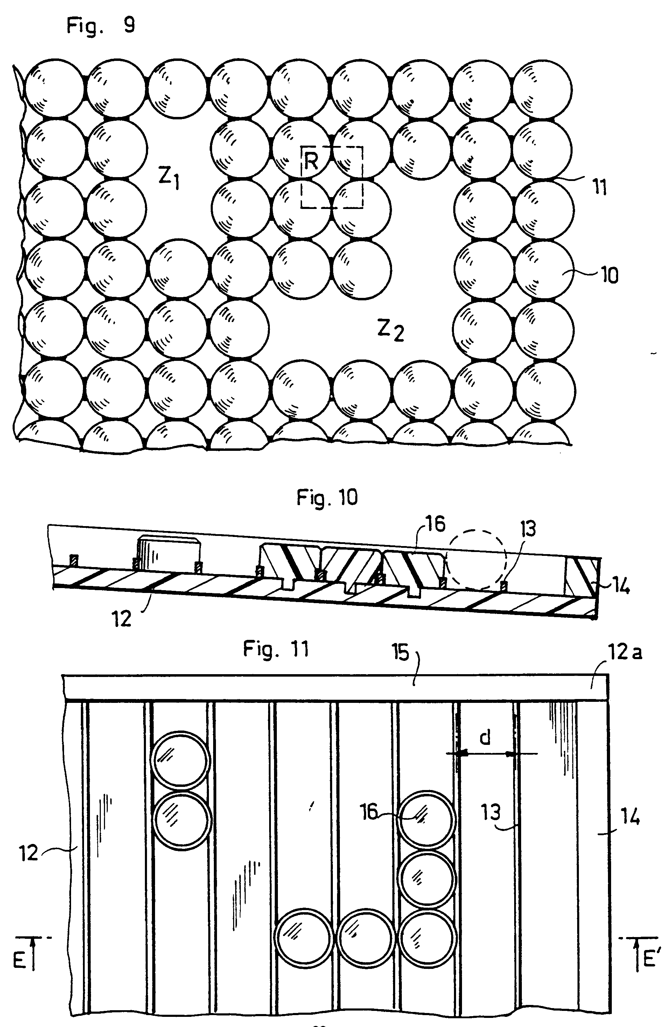

Le produit modulaire visé à cet exemple et illustré en plan à la figure 9 est constitué par une nappe de billes identiques 10, de diamètre égal à 4 mm. Par exemple, ces billes peuvent être des billes creuses de nickel possédant une couche superficielle en un matériau de brasage (étain/argent), l'épaisseur de l'ensemble étant d'environ 100 microns.

Ces billes sont agencées selon un arrangement plan de type cristallographique à maille élémentaire carrée (R). Chaque bille courante au coeur de la nappe est ainsi au contact de quatre billes contiguës. Ces billes sont liées entre elles au niveau de leurs zones de contact par des ménisques 11 constitués d'un liant souple plastique constitué par un composé soluble dans un solvant formé par le produit "Nicrobraz 300R" déjà évoqué (lequel est soluble dans l'acétone). Dans le produit modulaire fabriqué, le solvant mélangé au liant dans son état initial a été éliminé et les billes sont liées par le plastifiant comme déjà décrit.

La nappe visée en l'exemple comporte deux zones vides $Z_1$, $Z_2$ dépourvues de billes, l'une en forme de I, l'autre de L, afin de réaliser un matériau alvéolaire final possédant des inserts en forme de cornière à section en L et de barre à section rectangulaire.

Les figures 10 et 11 représentent un dispositif pour la fabrication du produit modulaire ci-dessus décrit. Ce dispositif comprend un plateau 12 en un matériau antiadhérent, comprenant un maillage de surface constitué par un réseau de réglettes de positionnement 13 parallèles.

Ces réglettes sont distantes d'une valeur d égale au diamètre des billes. Leur hauteur de dépassement au-dessus du plateau est de l'ordre du tiers du diamètre des billes et leur section est adaptée pour s'insérer sans contact dans l'interstice entre deux billes comme le montre la figure 10 (bille en traits discontinus).

Le plateau 12 est légèrement incliné vers un de ses angles 12a (double inclinaison vers les deux bordures 14 et 15, de l'ordre de 3°). Les deux bordures 14 adjacentes à l'angle 12a sont rectilignes.

Ainsi le maillage de surface constitué par les réglettes 13 et les bordures 14, 15 conditionne la périodicité bidimensionnelle de l'arrangement à maille élémentaire carrée que prendront les billes lors de leur mise en place.

En outre, le plateau 12 est pourvu, comme précédemment, de pions antiadhérents 16, qui occupent la place de certaines billes afin de réaliser les zones vides $Z_1$, $Z_2$ du produit intermédiaire fabriqué.

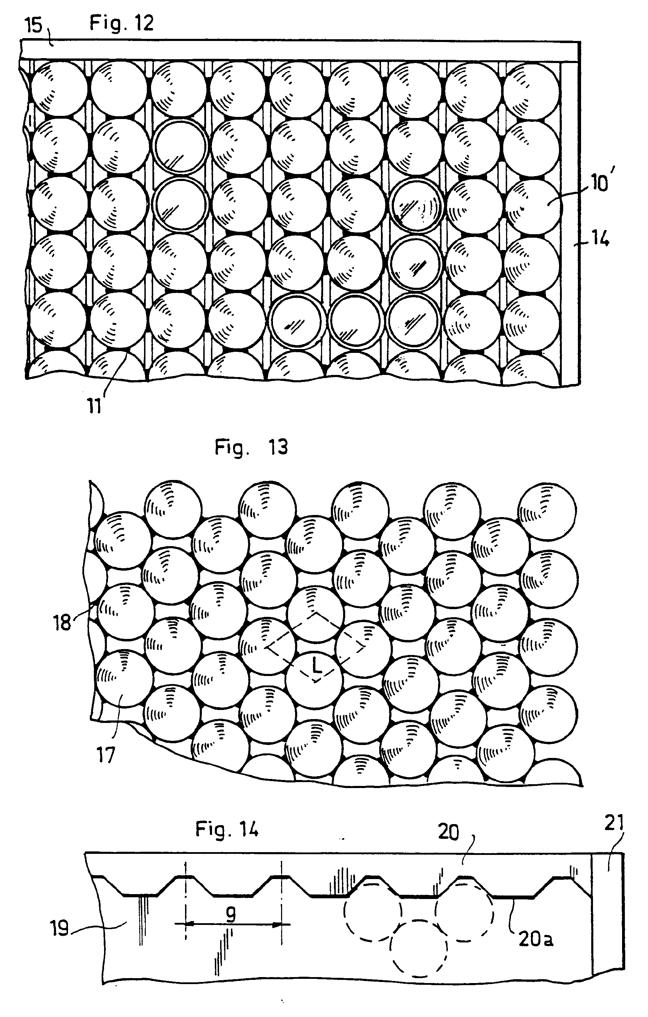

La figure 12 illustre la mise en place des billes 10. Un distributeur de billes se déplace au-dessus du plateau parallèlement aux réglettes de façon à distribuer les billes en ligne entre celles-ci. Le plateau est animé d'un mouvement de vibration et les billes s'organisent entre les réglettes avec appui contre les bordures rectilignes 14 et 15, suivant l'arrangement à maille élémentaire carrée.

Il est à noter que les billes, d'abord guidées par les réglettes, n'ont plus de contact avec celles-ci en fin de mise en place et sont simplement en contact les unes avec les autres. Une imprécision dans le positionnement de ces réglettes n'a pas d'influence sur la précision de l'arrangement obtenu (pas de dislocation à craindre). L'arrangement à maille carrée se développe à partir des deux bordures 14 et 15 de l'angle inférieur du plateau.

Comme précédemment, le procédé se poursuit par une opération de pulvérisation du liant dans son état initial liquide sur les billes et une opération de ventilation afin de conférer aux ménisques 11 leur état souple plastique par l'évaporation du solvant.

EXEMPLE 3

Cet exemple illustré aux figures 13 et 14 vise un produit modulaire analogue aux précédents mais dont les billes identiques 17 sont géométriquement agencées selon un arrangement plan de type cristallographique à maille élémentaire en forme de losange L.

En l'exemple, la nappe ne possède aucune zone vide et les billes sont des billes pleines de 0,5 mm de diamètre, constituées chacune d'une âme sphérique en matériau diélectrique, par exemple en céramique et d'une peau périphérique en ferrite de haute perméabilité magnétique (10 microns d'épaisseur environ). Le produit modulaire visé est destiné à la réalisation d'un matériau final de blindage non réflecteur des ondes radar.

Les ménisques 18 sont en "Nicobraz 300R" comme dans l'exemple 2, ce produit ayant la propriété de se dissoudre et se disperser dans la résine époxy.

La fabrication s'effectue au moyen d'un dispositif tel que représenté partiellement en plan à la figure 14, comprenant un plateau 19 doté le long d'un côté d'un maillage linéaire de bordure constitué par une réglette 20 comportant une ligne de plots de positionnement tels que 20a. Ces plots sont distants les uns des autres d'une valeur g = 1,63 D (où D est le diamètre des billes). Le plateau 19 est incliné vers la réglette 20 (angle de 3° environ) et, d'un angle inférieur, vers une bordure adjacente 21 (angle de 1° environ). Une bordure rectiligne 21 le long des autres côtés contribue à guider les billes lors de leur mise en place.

Après mise en place des billes, la fabrication est identique à celle décrite à l'exemple 2.

EXEMPLE 4

Cet exemple vise la fabrication d'un matériau alvéolaire de forme complexe prédéterminée à partir de nappes 22 et 23 du type de celle décrite à l'exemple 1 (arrangement plan à maille élémentaire triangulaire équilatéral). Dans cet exemple ont été utilisées deux variantes de nappes, l'une 22 à billes de 6 mm de diamètre, l'autre 23 à billes de 4 mm de diamètre.

Pour donner au matériau la forme de la pièce désirée, on utilise un moule en deux demi-coquilles 24 et 25 ; en l'exemple, la pièce comprend une partie courbée $P_1$, des parties planes $P_2$, $P_3$, d'épaisseurs différentes et un insert S.

La nappe 22 (billes de 6 mm) est découpée par un jet de solvant à une forme rectangulaire appropriée pour permettre de tapisser la partie courbée $P_1$ du moule. En cet exemple, la pièce désirée est prise en sandwich entre deux peaux métalliques en acier inoxydable telle que 26.

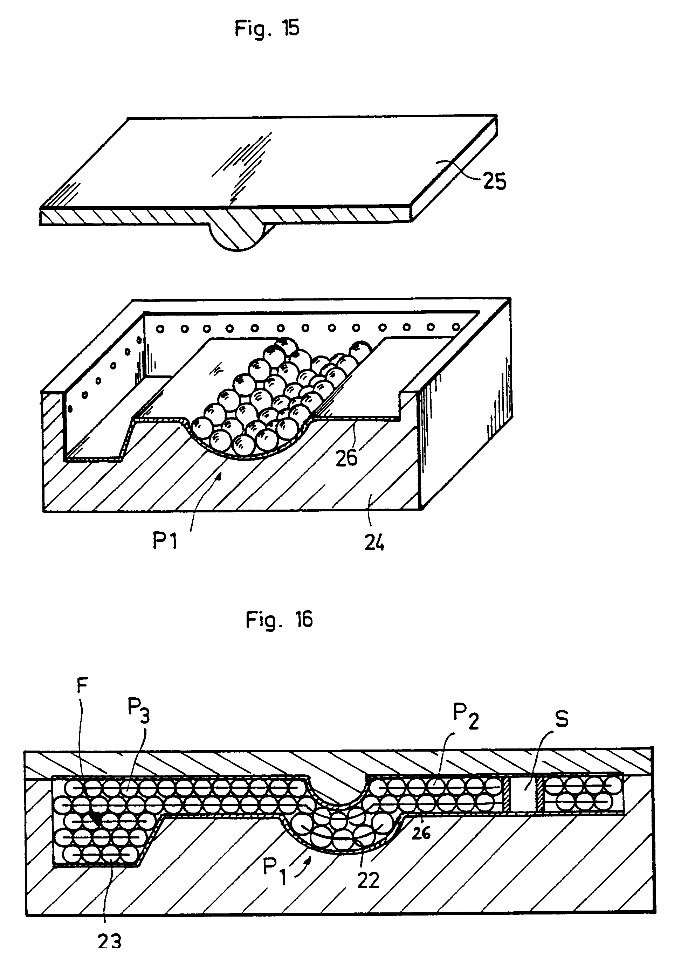

Une peau 26 est d'abord disposée sur le moule 24, puis la nappe 22 est appliquée dans la partie courbée $P_1$ afin d'épouser les formes de celle-ci, comme le montre la figure 15.

Ensuite, on dispose dans la partie la plus épaisse $P_3$ trois nappes telles que 23 (billes de 4 mm) avec interposition d'un produit de brasage, par exemple poudre de brasage projetée. L'on superpose ensuite une nappe similaire (billes de 4 mm) sur toute la longueur du moule. Enfin, l'on superpose deux morceaux de nappes similaires au-dessus (toujours avec interpositon de produit de brasage). Les dernières nappes possèdent une zone libre en correspondance avec l'insert S à mettre en place, ces zones libres étant superposées de façon à permettre la mise en place de l'insert dans le volume vacant. Cet insert S en acier inoxydable est disposé au contact des billes situées en bordure dudit volume vacant.

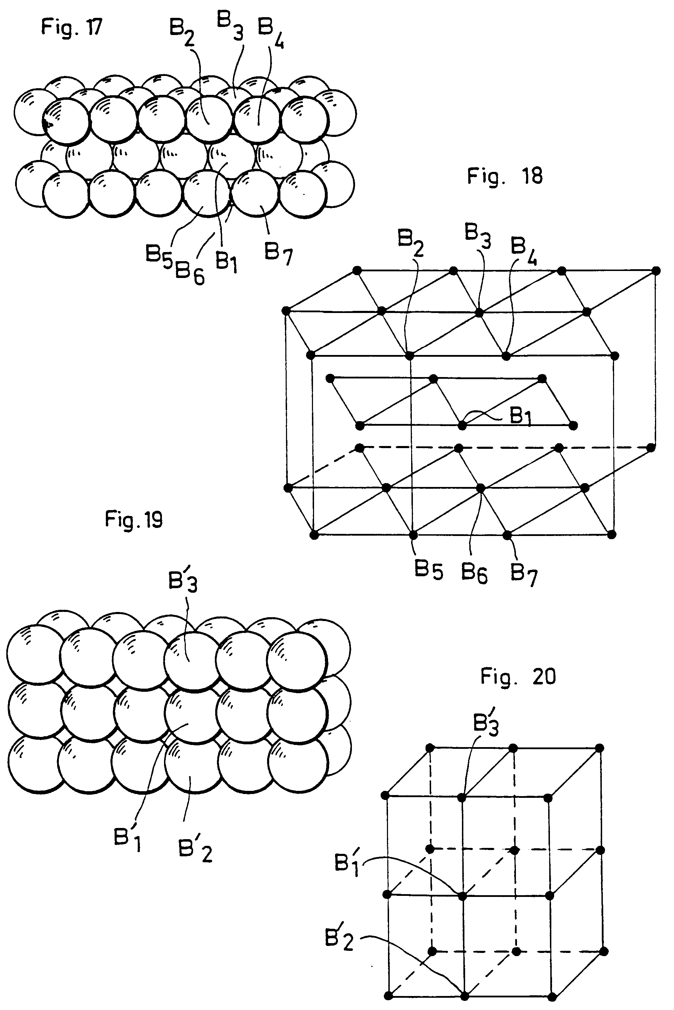

Les nappes de produits modulaires sont superposées avec un décalage comme l'illustrent les figures, de sorte que chaque bille d'une nappe vienne se situer entre six billes des deux nappes contiguës : trois billes de l'une et trois billes de l'autre (bien entendu dans le cas où il existe au moins trois nappes superposées comme dans la partie épaisse $P_3$). On aperçoit par exemple à la figure 17 pour une bille courante $B_1$, les trois billes en contact $B_2$, $B_3$, $B_4$ de la nappe supérieure, et les trois billes en contact $B_5$, $B_6$, $B_7$ de la nappe inférieure.

On obtient ainsi un arrangement volumique de type cristallographique hexagonal compact qui est symbolisé à la figure 18.

Après mise en place de la deuxième peau, on referme le moule au moyen de sa demi-coquille supérieure 25. Les côtés de la demi-coquille 24 comportent des petits trous pour l'échappement des gaz de sublimation.

L'ensemble est ensuite soumis à un traitement thermique sous vide à 1 050° C pendant environ 15 minutes de façon à engendrer la sublimation du composé sublimable du liant pendant la montée en température (vers 300° C), puis la fusion de la poudre de brasage entre billes et entre billes, peaux et insert.

Après refroidissement et démoulage, on obtient une pièce complexe constituée d'un matériau alvéolaire qui associe de remarquables qualités de légèreté (densité : 0,3) et d'excellentes caractéristiques mécaniques spécifiques provenant de sa structure de type cristallographique rigoureux.

Il est à noter que, en variante, les nappes peuvent également être superposées en coincidence de sorte que chaque bille d'une nappe vienne se situer entre deux billes des deux nappes contiguës, avec un point de contact avec chacune de celles-ci, en vue de former un arrangement cristallographique hexagonal simple. La densité du matériau alvéolaire final est alors plus faible (0,25).

EXEMPLE 5

Cet exemple illustré aux figures 19 et 20, vise un matériau alvéolaire fabriqué par le même processus général que le précédent, avec des nappes à maille élémentaire carrée du type de celles de l'exemple 2.

Dans ce cas, les nappes des produits modulaires sont superposées en coincidence de sorte que chaque bille courante $B'_1$ d'une nappe vienne se situer entre deux billes $B'_2$, $B'_3$ des deux nappes contiguës, avec un point de contact avec chacune desdites billes, en vue de former un arrangement volumique de type cristallographique cubique simple (symbolisé à la figure 20).

L'opération de fixation des billes entre elles consiste à éliminer préalablement le liant entre billes en immergeant l'empilement dans de l'acétone, puis à soumettre ledit empilement à un traitement thermique pour engendrer la fusion de la couche superficielle de brasure (étain/argent) des billes. La densité du matériau alvéolaire obtenu est dans ce cas sensiblement égale à 0,21.

Il est à noter que les nappes de cette structure (maille élémentaire carrée) peuvent également être superposées avec un décalage de sorte que chaque bille d'une nappe donnée vienne se situer entre quatre billes des deux nappes contiguës (deux de l'une et deux de l'autre) avec un point de contact avec chacune des quatre billes, en vue de former un arrangement volumique de type cristallographique quadratique. La densité du matériau alvéolaire est alors d'environ 0,3.

## EXEMPLE 6

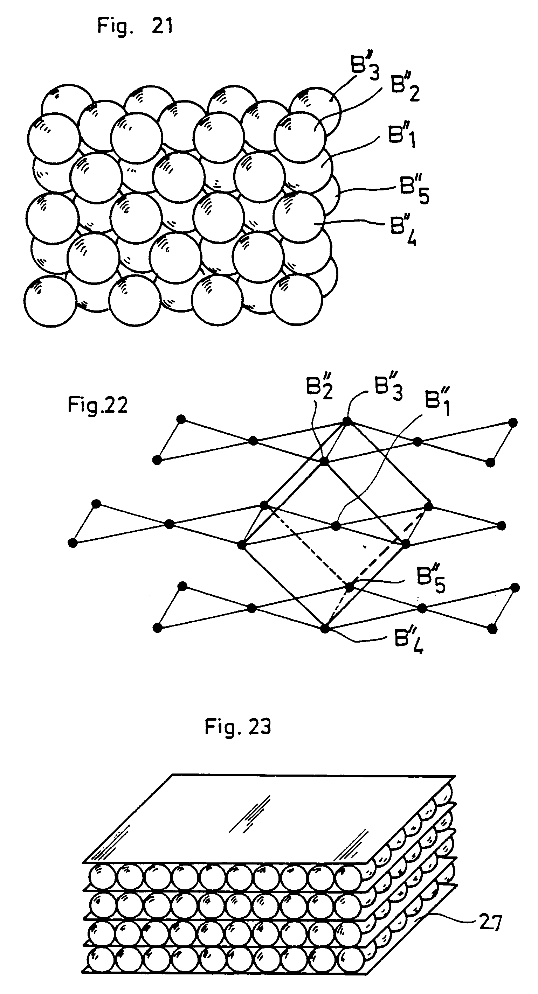

Cet exemple illustré aux figures 21 et 22 vise un matériau alvéolaire fabriqué par le même processus général que les précédents, avec des nappes à maille élémentaire en forme de losange du type de celles de l'exemple 3.

En cet exemple, les nappes de produits modulaires sont superposées avec un décalage de sorte que chaque bille $B''_1$ d'une nappe donnée vienne se situer entre quatre billes des deux nappes contiguës (deux, $B''_2$, $B''_3$ de l'une et deux, $B''_4$, $B''_5$ de l'autre), avec un point de contact avec chacune des quatre billes, en vue de former un arrangement volumique de type cristallographique cubique centré (symbolisé à la figure 22).

Le matériau alvéolaire est destiné en cet exemple à former un blindage non réflecteur des ondes radar et la fixation des billes de l'empilement est effectuée en injectant entre billes une résine époxy polymérisable à froid (réf : "XB 3052" fabriquée par "CIBA-GEIGY"). Cette résine dissout d'abord le liant entre billes et polymérise ensuite en quelques heures.

On obtient un matériau de densité sensiblement égale à 0,28, bénéficiant de remarquables propriétés de non-réflexion des ondes radar en raison de la nature de ses constituants et de la répartition tridimensionnelle rigoureuse des billes.

Il est à noter que les produits modulaires intermédiaires conformes à l'invention permettent, le cas échéant, d'alléger des pièces en alliage léger, la fixation entre billes étant alors réalisée en coulant l'alliage léger fondu (à la place de la résine). Bien entendu, les billes sont alors creuses et en un matériau apte à résister à la température de fusion de l'alliage léger (billes de nickel). Pour des alliages d'aluminium, on peut ainsi réduire la densité d'une pièce d'une valeur de l'ordre de 2,7 à une valeur de 0,77 dans le cas de billes de nickel d'un diamètre externe de 6 mm et d'épaisseur de peau de 100 microns. On évite ainsi d'avoir à usiner des pièces en alliage léger en vue de les alléger.

## EXEMPLE 7

Cet exemple illustre le conditionnement de produits modulaires intermédiaires conformes à l'invention.

Les nappes des divers produits sont superposées en un empilement avec interposition de feuilles de protection adhésives telles que 27. Les produits peuvent être ainsi facilement stockés et transportés. A l'utilisation, les feuilles de protection sont retirées et les nappes séparées.

## Revendications

1. Procédé de fabrication d'un matériau alvéolaire, consistant :

. à utiliser des produits intermédiaires constitués chacun par une nappe déformable de billes (2, 10, 17) de diamètres sensiblement égaux, géométriquement agencées selon un arrangement plan à une seule courbe de type cristallographique présentant une maille élémentaire en forme de triangle équilatéral, de carré ou de losange, où chaque bille courante au coeur de la nappe est en contact avec 6 ou 4 billes contiguës, lesdites billes étant liées les unes aux autres au voisinage de leurs zones de contact par des ménisques (4, 11, 18) formés d'un liant souple adhérant aux billes et conférant à la nappe à la fois une cohésion d'ensemble et un caractère déformable stable, de façon à permettre de petits déplacements des billes les unes par rapport aux autres sans séparation de celles-ci,

. à appliquer une première nappe déformable sur une forme (24) fonction du matériau alvéolaire à obtenir de façon à amener la nappe à épouser ladite forme,

. à appliquer sur ladite première nappe une deuxième nappe déformable de façon à mettre en contact les billes de ladite deuxième nappe avec celles de la première nappe et, le cas échéant, à superposer, de façon analogue, d'autres nappes déformables pour obtenir un arrangement volumique de type cristallographique des billes des diverses nappes,

. et à fixer entre elles les billes en contact des nappes contiguës.

2. Procédé selon la revendication 1, caractérisé en ce que l'on utilise des produits modulaires intermédiaires ayant un liant constitué d'un mélange d'un composé sublimable à chaud et d'une poudre de brasage, l'on superpose les divers produits modulaires avec interposition d'un produit de brasage entre nappes, et l'on soumet l'empilement à un traitement thermique apte à engendrer la sublimation du composé sublimable et la fusion de la poudre et du produit de brasage.

3. Procédé selon la revendication 1, caractérisé en ce que l'on utilise des produits modulaires intermédiaires ayant un liant soluble dans un solvant et des billes possédant une couche superficielle en un matériau de brasage, l'on superpose les produits modulaires et l'on soumet l'empilement à l'action d'un solvant pour dissoudre le liant, puis à un traitement thermique apte à engendrer la fusion du matériau de brasage.

4. Procédé selon la revendication 1, caractérisé en ce que l'on utilise des produits modulaires intermédiaires ayant un liant constitué d'une résine polymérisable à chaud, l'on superpose les divers produits modulaires avec interposition d'un liant de même nature entre nappes, et l'on soumet l'empilement à un traitement thermique apte à engendrer la polymérisation du liant.

5. Procédé selon l'une des revendications 1, 2, 3, ou 4, caractérisé en ce que :

   – l'on utilise des produits modulaires dans lequel les billes (2) de la nappe sont géométriquement agencées selon un arrangement plan de type cristallographique à maille élémentaire en forme de triangle équilatéral (T), où chaque bille courante au coeur de la nappe est en contact avec 6 billes contiguës,

   – l'on superpose les produits modulaires en coïncidence de sorte que chaque bille d'une nappe vienne se situer entre deux billes des deux nappes contiguës, avec un point de contact avec chacune desdites billes en vue de former un arrangement volumique de type cristallographique hexagonal simple.

6. Procédé selon l'une des revendications 1, 2, 3 ou 4, caractérisé en ce que :

   – l'on utilise des produits modulaires (22, 23) dans lequel les billes (2) de la nappe sont géométriquement agencées selon un arrangement plan de type cristallographique à maille élémentaire en forme de triangle équilatéral (T), où chaque bille courante au coeur de la nappe est en contact avec 3 billes contiguës,

   – l'on superpose les produits modulaires avec un décalage de sorte que chaque bille $(B_1)$ d'une nappe vienne se situer entre six billes des deux nappes contiguës (trois billes de l'une $B_2$, $B_3$, $B_4$ et trois billes de l'autre $B_5$, $B_6$, $B_7$), avec un point de contact avec chacune desdites six billes, en vue de former un arrangement volumique de type cristallographique hexagonal compact.

7. Procédé selon l'une des revendications 1, 2, 3 ou 4, caractérisé en ce que :

   – l'on utilise des produits modulaires dans lesquels les billes (10, 17) de la nappe sont géométriquement agencées selon un arrangement plan de type cristallographique à maille élémentaire en forme de carré (R) où chaque bille courante au coeur de la nappe est en contact avec 4 billes contiguës,

   – l'on superpose les produits modulaires en coïncidence de sorte que chaque bille $(B'_1)$ d'une nappe vienne se situer entre deux billes $(B'_2, B'_3)$ des deux nappes contiguës, avec un point de contact avec chacune desdites billes, en vue de former un arrangement volumique de type cristallographique cubique simple.

8. Procédé selon l'une des revendications 1, 2, 3 ou 4, caractérisé en ce que :

   – l'on utilise des produits modulaires dans lesquels les billes (10, 17) de la nappe sont géométriquement agencées selon un arrangement plan de type cristallographique à maille élémentaire en forme de losange (L), où chaque bille courante au coeur de la nappe est en contact avec 4 billes contiguës,

   – l'on superpose les produits modulaires avec un décalage de sorte que chaque bille $(B''_1)$ d'une nappe données vienne se situer entre quatre billes des deux nappes contiguës (deux de l'une $B''_2$, $B''_3$ et deux de l'autre $B''_4$, $B''_5$) avec un point de contact avec chacune des quatre billes, en vue de former un arrangement volumique de type cristallographique cubique centré.

9. Procédé selon l'une des revendications 1 à 8, dans lequel l'on utilise des produits modulaires intermédiaires ayant un liant soluble dans un solvant, caractérisé en ce que, préalablement chaque produit modulaire est découpé en fonction de la forme du matériau à fabriquer, en projetant sur la nappe du produit modulaire un jet directionnel de solvant suivant un contour approprié et en détachant les portions de nappe au niveau des ménisques ainsi liquéfiés.

10. Procédé selon l'une des revendications 1 à 9, dans lequel on utilise des produits modulaires intermédiaires ayant au moins une zone vide dépourvue de billes, l'on superpose ces produits de façon à superposer leur zone vide, l'on inclut dans celles-ci un insert (S) de forme correspondant au volume vacant de façon à le disposer au contact des billes situées en bordure dudit volume, et l'on fixe ledit insert et lesdites billes par leurs zones de contact.

11. Produit modulaire intermédiaire spécialement adapté pour la mise en oeuvre du procédé conforme à l'une des revendications 1 à 10, constitué par une nappe de billes (2, 10, 17) de diamètres sensiblement égaux, géométriquement agencées selon un arrangement plan à une seule couche de type cristallographique, présentant une maille élémentaire en forme de triangle équilatéral, de carré ou de losange, où chaque bille courante au coeur de la nappe est en contact avec 6 ou 4 billes contiguës, lesdites billes étant liées les unes aux autres au voisinage de leurs zones de contact par des ménisques (4, 11, 18), caractérisé en ce que les ménisques entre billes sont formés d'un liant souple adhérant aux billes et conférant à la nappe, à la fois, une cohésion d'ensemble et un caractère déformable stable de façon à permettre de petits déplacements des billes les unes par rapport aux autres sans séparation de celles-ci lorsqu'on amène ladite nappe à épouser une forme fonction du matériau alvéolaire désiré.

12. Produit modulaire en nappe selon la revendication 11, caractérisé en ce que le liant souple entre billes est un liant souple possédant des propriétés plastiques.

13. Produit modulaire en nappe selon la revendication 12, caractérisé en ce que le liant souple entre billes est un composé sublimable à chaud.

14. Produit modulaire en nappe selon la revendication 12, caractérisé en ce que le liant souple entre billes est un mélange d'un composé sublimable à chaud et d'une poudre de brasage.

15. Produit modulaire en nappe selon la revendication 12, caractérisé en ce que le liant souple entre billes est un composé soluble dans un solvant, chaque bille (10) possédant une couche superficielle en un matériau de brasage.

16. Produit modulaire en nappe selon la revendication 12, caractérisé en ce que le liant souple entre billes est une résine polymérisable à chaud.

17. Produit modulaire en nappe selon l'une des revendications 11 à 16, dans lequel les billes (2) de la nappe sont géométriquement agencées selon un arrangement plan de type cristallographique à maille élémentaire en forme de triangle équilatéral (T), où chaque bille courante au coeur de la nappe est en contact avec 6 billes contiguës.

18. Produit modulaire en nappe selon l'une des revendications 11 à 16, dans lequel les billes (10, 17) de la nappe sont géométriquement agencées selon un arrangement plan de type cristallographique à maille élémentaire en forme de carré (R) ou de losange (L), où chaque bille courante au coeur de la nappe est en contact avec 4 billes contiguës.

19. Produit modulaire en nappe selon l'une des revendications 11 à 18, dans lequel chaque bille comprend une peau continue autoporteuse formée d'au moins une couche en un matériau du groupe suivant : métal, alliage métallique, céramique, matière synthétique ou matériau composite.

20. Produit modulaire en nappe selon l'une des revendications 11 à 19, dans lequel les billes sont creuses et présentent un diamètre externe compris entre 0,1 mm et 20 mm.

21. Produit modulaire en nappe selon l'une des revendications 11 à 20, caractérisé en ce que la nappe de billes présente à coeur au moins une zone vide ($Z_1$, $Z_2$) dépourvue de billes.

22. Produit modulaire en nappe selon l'une des revendications 11 à 21, caractérisé en ce qu'il comprend, appliquée sur chaque face de la nappe, une feuille pelable de protection (27).

23. Procédé de fabrication d'un produit modulaire conforme à l'une des revendications 11 à 22, consistant à utiliser des billes de diamètre sensiblement égaux, caractérisé en ce que :
– l'on positionne lesdites billes en une seule couche sur un plateau (5, 12, 19) doté d'un maillage (6, 13, 20) adapté pour leur imposer un arrangement géométrique de type cristallographique, présentant une maille élémentaire en forme de triangle équilatéral, de carré ou de losange, où chaque bille au coeur de la couche est en contact avec 6 ou 4 billes contiguës,
– l'on dépose sur lesdites billes un liant se trouvant dans un état initial liquide, apte à évoluer entre :
   . ledit état initial liquide, de viscosité et de mouillabilité à l'égard des billes lui permettant de s'écouler sur celles-ci et se fixer dans les zones de contact entre billes pour former des ménisques,
   . et un état intermédiaire souple stable, possédant des propriétés d'adhérence à l'égard des billes,
– après formation des ménisques liquides entre billes en contact, à faire évoluer le liant de son état initial vers son état intermédiaire de façon à former des ménisques souples stables, adhérant auxdites billes.

24. Procédé de fabrication selon la revendication 23, caractérisé en ce que l'on choisit un liant possédant :
– un état initial liquide de viscosité comprise entre 4 et 400 centipoises et de mouillabilité à l'égard des billes correspondant à un angle de contact compris entre 30° et 60°,
– un état intermédiaire souple plastique, apte à développer des forces d'adhérence à l'égard des billes comprises entre 1 et 10 décaNewtons par cm².

25. Procédé selon l'une des revendications 23 ou 24, caractérisé en ce que l'on dépose un liant constitué, dans son état initial, par un mélange liquide de solvant volatile, de composé sublimable à chaud et de poudre de brasage, et après formation des ménisques, l'on assure l'évaporation du solvant à faible température de façon à obtenir, dans l'état intermédiaire du liant, des ménisques souples plastiques, aptes à évoluer par traitement thermique ultérieur vers un état final rigide.

26. Procédé de fabrication selon l'une des revendication 23, 24 ou 25, en vue d'obtenir un produit à arrangement plan de type cristallographique à maille élémentaire triangulaire équilatérale (T), caractérisé en ce que l'on dispose les billes sur un plateau (5) incliné vers un bord, comprenant le long de ce bord un maillage linéaire constitué par une ligne de plots de positionnement (6a), sensiblement distants les uns des autres d'une valeur e = 1,73 D, où D est le diamètre des billes.

27. Procédé de fabrication selon l'une des revendications 23, 24 ou 25, en vue d'obtenir un produit à arrangement plan de type cristallographique à maille élémentaire carrée (R), caractérisé en ce que l'on dispose les billes sur un plateau incliné (12) comprenant un maillage de surface constitué par un réseau de réglettes de positionnement (13) parallèles, sensiblement distantes d'une valeur correspondant au diamètre des billes.

28. Procédé de fabrication selon l'une des revendications 23, 24, 25, en vue d'obtenir un produit à arrangement plan de type cristallographique à maille élémentaire en forme de losange (L), caractérisé en ce que l'on dispose les billes sur un plateau (19) incliné vers un bord, comprenant le long de ce bord un maillage linéaire constitué par une ligne de plots de positionnement (20a) sensiblement distants les uns des autres d'une valeur g = 1,63 D, où D est le diamètre des billes.

29. Procédé de fabrication selon l'une des revendications 23 à 28, dans lequel le liant est appliqué dans son état initial par projection sur les billes positionnées sur le plateau.

30. Procédé de fabrication selon l'une des revendications 23 à 28, dans lequel le liant est appliqué dans son état initial à la seringue dans les interstices entre billes positionnées sur le plateau.

31. Procédé de fabrication selon l'une des revendications 23 à 28, dans lequel le liant est appliqué dans son état initial par enduction des billes positionnées sur le plateau.

32. Procédé de fabrication selon l'une des revendications 23 à 31, caractérisé en ce que les billes sont positionnées sur un plateau possédant au moins une zone pleine en relief (8) en vue d'occuper la place d'un nombre déterminé de billes et de former dans la couche, lors du positionnement desdites billes, au moins une zone vide ($Z_1$, $Z_2$) dépourvue de billes.

33. Procédé de fabrication selon la revendication 32, caractérisé en ce que :

– les billes (2) sont positionnées sur un plateau possédant au moins une zone pleine en relief, escamotable (8),

– l'on dépose du liant dans son état initial sur les billes ainsi positionnées et l'on amène celui-ci à évoluer vers son état intermédiaire,

– la ou lesdites zones en relief (8) sont ensuite escamotées,

– d'autres billes (3) de diamètres externes sensiblement identiques et de caractéristiques différentes sont positionnées dans une ou des zones ainsi laissées vacantes,

– l'on dépose à nouveau du liant dans son état initial sur les billes ainsi nouvellement positionnées et l'on amène celui-ci à évoluer vers son état intermédiaire.

34. Dispositif pour la fabrication d'un produit modulaire conformément au procédé de la revendication 23, caractérisé en ce qu'il comprend un plateau incliné (5, 19) doté, le long du côté le plus bas, d'un maillage linéaire de bordure (6, 7 ; 20, 21) apte à positionner une ligne de billes selon une répartition linéaire prédéterminée, un distributeur de billes situé au-dessus du plateau, et des moyens de projection permettant de projeter un liant au-dessus des billes disposées sur le plateau.

35. Dispositif pour la fabrication d'un produit modulaire conformément au procédé de la revendication 23, caractérisé en ce qu'il comprend un plateau (12) doté sur sa surface d'un maillage formant un réseau de surface (13, 14, 15), apte à positionner une nappe de billes selon une répartition plane prédéterminée, un distributeur de billes situé au-dessus du plateau, et des moyens de projection permettant de projeter un liant au-dessus des billes disposées sur le plateau.

## Patentansprüche

1. Verfahren zur Herstellung eines Zellenmaterials bestehend :

. in dem Gebrauch von Zwischenprodukten, von denen jedes durch eine verformbare Schicht von Kugeln (2, 10, 17) mit im wesentlichen gleichen Durchmessern gebildet wird, wobei die besagten Kugeln in einer einzigen Lage kristallographischer Art mit einer Elementarzelle in der Form eines gleichseitigen Dreiecks, eines Quadrats oder eines Rhombus gemäß einer ebenen Anordnung geometrisch verteilt sind, während jede im Inneren der Schicht vorhandene Kugel mit 6 oder 4 anschließenden Kugeln in Kontakt ist und die besagten Kugeln im Bereiche ihier Kontaktzonen durch Menisken (4, 11, 18) miteinander verbunden sind, und zwar bestehen die besagten Menisken aus einem an den Kugeln haftenden flexiblen Bindemittel, das der Schicht gleichzeitig Gesamtkohäsion und eine stabile verformbare Beschaffenheit vermittelt, so daß kleine Verlagerungen der Kugeln im Verhältnis zueinander ohne trennung der besagten Kugeln möglich sind,

. in dem Auftragen einer ersten verformbaren Schicht auf eine von dem zu erzielenden Zellenmaterial abhängige Form (24), damit sich die Schicht an die besagte Form anpaßt,

. in dem Auftragen einer zweiten verformbaren Schicht auf die besagte erste Schicht, um die Kugeln der besagten zweiten Schicht mit denen der ersten Schicht in Berührung zu bringen und gegebenenfalls im Überlagern auf analoge Weise anderer verformbarer Schichten, um eine räumliche Anordnung kristallographischer Art der Kugeln verschiedener Schichten zu erzielen,

. und im gegenseitigen Fixieren der in Kontakt befindlichen Kugeln anschließender Schichten.

2. Verfahren nach Anspruch 1, dadurch gekennzeichnet, daß man von modularen Zwischenprodukten Gebrauch macht, die aus einem Gemisch einer im heißen Zustand sublimierbaren Verbindung und einem Lötpulver bestehen, wobei man die verschiedenen modularen Produkte unter Zwischenfügung eines Lötprodukts zwischen die Schichten überlagert und den Stapel einer Wärmebehandlung unterzieht, die so beschaffen ist, daß sie die Sublimation der sublimierbaren Verbindung und die Verschmelzung des Pulvers und des Lötprodukts bewirkt.

3. Verfahren nach Anspruch 1, dadurch gekennzeichnet, daß man von modularen Zwischenprodukten Gebrauch macht, die ein in einem Lösungsmittel lösliches Bindemittel und Kugeln mit einer Oberflächenschicht aus einem Lötmaterial umfassen, daß man die modularen Produkte überlagert und daß man den Stapel der Einwirkung eines Lösungsmittels unterzieht, um das Bindemittel aufzulösen, worauf eine Wärmebehandlung folgt, die so beschaffen ist, daß sie Verschmelzung des Lötmaterials bewirkt.

4. Verfahren nach Anspruch 1, dadurch gekennzeichnet, daß man von modularen Zwischenprodukten Gebrauch macht, die ein aus einem im heißen Zustand polymerisierbaren Harz bestehendes Bindemittel umfassen, daß man die verschiedenen modularen Produkte unter Zwischenfügung eines Bindemittels der gleichen Art zwischen die Schichten überlagert, und daß man den Stapel einer Wärmebehandlung unterzieht, die so beschaffen ist, daß sie Polymerisation des Bindemittels bewirkt.

5. Verfahren nach einem der Ansprüche 1, 2, 3 oder 4, dadurch gekennzeichnet :

– daß man von modularen Produkten Gebrauch macht, bei denen die Kugeln (2) der Schicht geometrisch gemäß einer ebenen Anordnung kristallographischer Art mit einer Elementarzelle in der Form eines gleichseitigen Dreiecks (T) verteilt sind, wobei jede im Innern der Schicht vorhandene Kugel mit 6 anschließenden Kugeln in Kontakt ist,

– daß man die modularen Produkte koinzident Überlagert, so daß jede Kugel einer Schicht zwischen zwei Kugeln der zwei anschließenden Schichten zu liegen kommt, wobei zu jeder der besagten Kugeln ein Kontaktpunkt besteht, um eine räumliche Anordnung der kristallographischen Art einfach hexagonal zu bilden.

6. Verfahren nach einem der Ansprüche 1, 2, 3 oder 4, dadurch gekennzeichnet :

– daß man von modularen Produkten (22, 23) Gebrauch macht, bei denen die Kugeln (2) in der Schicht geometrisch gemäß einer ebenen Anordnung der kristallographischen Art mit einer Elementarzelle in der Form eines gleichseitigen Dreiecks (T) verteilt sind, wobei jede im Innern der Schicht vorhandene Kugel mit 6 anschließenden Kugeln in Kontakt ist,

– daß man die modularen Produkte unter Versetzung überlagert, so daß jede Kugel ($B_1$) einer Schicht zwischen sechs Kugeln der beiden anschließenden Schichten zu liegen kommt (drei Kugeln, $B_2$, $B_3$, $B_4$, der einen Schicht und drei Kugeln $B_5$, $B_6$, $B_7$ der anderen Schicht), wobei zu jeder der besagten sechs Kugeln ein Kontaktpunkt besteht, um eine räumliche Anordnung der kristallographischen Art dichtgepackt hexagonal zu bilden.

7. Verfahren nach einem der Ansprüche 1, 2, 3 oder 4, dadurch gekennzeichnet,

– daß man von modularen Produkten Gebrauch macht, bei denen die Kugeln (10, 17) der Schicht geometrisch gemäß einer ebenen Anordnung kristallographischer Art mit einer Elementarzelle in der Form eines Quadrats (R) verteilt sind, wobei jede im Innern der Schicht vorhandene Kugel mit 4 anschließenden Kugeln in Kontakt ist,

– daß man die modularen Produkte koinzident überlagert, so daß jede Kugel ($B'_1$) einer Schicht zwischen zwei Kugeln ($B'_2$, $B'_3$) der beiden anschließenden Schichten zu liegen kommt, wobei zu jeder der besagten Kugeln ein Kontaktpunkt besteht, um eine räumliche Anordnung der kristallographischen Art einfach kubisch zu bilden.

8. Verfahren nach einem der Ansprüche 1, 2, 3 oder 4, dadurch gekennzeichnet,

– daß man von modularen Produkten Gebrauch macht, bei denen die Kugeln (10, 17) der Schicht geometrisch gemäß einer ebenen Anordnung kristallographischer Art mit einer Elementarzelle in der Form eines Rhombus (L) verteilt sind, wobei jede im Innern der Schicht vorhandene Kugel mit 4 anschließenden Kugeln in Kontakt ist,

– daß man die modularen Produkte unter Versetzung überlagert, so daß jede Kugel ($B''_1$) einer bestimmten Schicht zwischen vier Kugeln der beiden anschließenden Schichten zu liegen kommt (zwei, $B''_2$, $B''_3$, der einen Schicht und zwei, $B''_4$, $B''_5$, der anderen Schicht), wobei zu jeder der vier Kugeln ein Kontaktpunkt besteht, um eine räumliche Anordnung der kristallographischen Art kubisch-innenzentriert zu bilden.

9. Verfahren nach einem der Ansprüche 1 bis 8, bei dem man von modularen Zwischenprodukten mit einem in einem Lösungsmittel löslichen Bindemittel Gebrauch macht, dadurch gekennzeichnet, daß zuvor jedes modulare Produkt in Abhängigkeit von der zu fertigenden Form des Materials zugeschnitten wird, indem man auf die Schicht des modularen Produkts nach einer entsprechenden Kontur einen gerichteten Lösungsmittelstrahl aufspritzt und die teile der Schicht im Bereich der so verflüssigten Menisken ablöst.

10. Verfahren nach einem der Ansprüche 1 bis 9, bei dem man von modularen Zwischenprodukten mit mindestens einer Leerzone ohne Kugeln Gebrauch macht, diese Produkte so überlagert, daß ihre Leerzonen übereinander angeordnet sind, in diese einen Einsatz (S) von dem Leerraum entsprechender Form einfügt, und zwar so, daß der besagte Einsatz mit den am Rande des besagten Raumes gelegenen Kugeln in Kontakt ist, und den besagten Einsatz und die besagten Kugeln mittels ihrer Kontaktzonen fixiert.

11. Modulares Zwischenprodukt, das eigens für die Durchführung des Verfahrens nach einem der Ansprüche 1 bis 10 gestaltet ist, bestehend in einer Schicht von Kugeln (2, 10, 17) mit im wesentlichen gleichen Durchmessern, wobei die besagten Kugeln geometrisch gemäß einer ebenen Anordnung mit einer einzigen Lage kristallographischer Art verteilt sind, wobei die besagte Schicht eine Elementarzelle in der Form eines gleichseitigen Dreiecks, eines Quadrats oder eines Rhombus besitzt, während jede im Innern der Schicht vorhandene Kugel mit 6 oder 4 anschließenden Kugeln in Kontakt ist und die besagten Kugeln im Bereiche ihrer Kontaktzonen durch Menisken (4, 11, 18) miteinander verbunden sind, dadurch gekennzeichnet, daß die Menisken zwischen den Kugeln aus einem flexiblen Bindemittel bestehen, das an den Kugeln haftet und der Schicht gleichzeitig eine Gesamtkohäsion und eine stabile verformbare Beschaffenheit vermittelt, so daß kleine Verlagerungen der Kugeln im Verhältnis zueinander ohne Trennung der besagten Kugeln möglich sind, wenn man bewirkt, daß die besagte Schicht sich an eine von dem gewünschten Zellenmaterial abhängige Form anpaßt.

12. Modulares Produkt in Schichtform nach Anspruch 11, dadurch gekennzeichnet, daß das flexible Bindemittel zwischen den Kugeln ein flexibles Bindemittel mit plastischen Eigenschaften ist.

13. Modulares Produkt in Schichtform nach Anspruch 12, dadurch gekennzeichnet, daß das flexible Bindemittel zwischen den Kugeln eine im heißen Zustand sublimierbare Verbindung ist.

14. Modulares Produkt in Schichtform nach Anspruch 12, dadurch gekennzeichnet, daß das flexible Bindemittel zwischen den Kugeln ein Gemisch einer im heißen Zustand sublimierbaren Verbindung und eines Lötpulvers ist.

15. Modulares Produkt in Schichtform nach Anspruch 12, dadurch gekennzeichnet, daß das flexible Bindemittel zwischen den Kugeln eine in einem Lösungsmittel lösliche Verbindung ist, wobei jede Kugel (10) eine Oberflächenschicht aus einem Lötmaterial besitzt.

16. Modulares Produkt in Schichtform nach Anspruch 12, dadurch gekennzeichnet, daß das flexible Bindemittel zwischen den Kugeln ein im heißen Zustand polymerisierbares Harz ist.

17. Modulares Produkt in Schichtform nach einem der Ansprüche 11 bis 16, bei dem die Kugeln (2) der Schicht geometrisch gemäß einer ebenen Anordnung kristallographischer Art mit einer Elementarzelle in der Form eines gleichseitigen Dreiecks (t) verteilt sind, wobei jede im Innern der Schicht vorhandene Kugel mit 6 anschließenden Kugeln in Kontakt ist.

18. Modulares Produkt in Schichtform nach einem der Ansprüche 11 bis 16, bei dem die Kugeln (10, 17) der Schicht geometrisch gemäß einer ebenen Anordnung kristallographischer Art mit einer Elementarzelle in Form eines Quadrats (R) oder eines Rhombus (L) verteilt sind, wobei jede im Innern der Schicht vorhandene Kugel mit 4 anschließenden Kugeln in Kontakt ist.

19. Modulares Produkt in Schichtform nach einem der Ansprüche 11 bis 18, bei dem jede Kugel eine kontinuierliche selbsttragende Haut aus mindestens einer Lage eines Materials der folgenden Gruppe umfaßt: Metall, Metallegierung, Keramik, synthetisches Material oder Verbundstoff.

20. Modulares Produkt in Schichtform nach einem der Ansprüche 11 bis 19, bei dem die Kugeln hohl sind und einen Außendurchmesser zwischen 0,1 mm und 20 mm aufweisen.

21. Modulares Produkt in Schichtform nach einem der Ansprüche 11 bis 20, dadurch gekennzeichnet, daß die Schicht der Kugeln im Inneren mindestens eine Leerzone ($Z_1$, $Z_2$) ohne Kugeln aufweist.

22. Modulares Produkt in Schichtform nach einem der Ansprüche 11 bis 21, dadurch gekennzeichnet, daß es an jeder Fläche der Schicht eine abziehbare Schutzfolie (27) umfaßt.

23. Verfahren zur Herstellung eines modularen Produkts nach einem der Ansprüche 11 bis 22, darin bestehend, daß von Kugeln mit im wesentlichen gleichem Durchmesser Gebrauch gemacht wird, dadurch gekennzeichnet,

– daß man die besagten Kugeln in einer einzigen Lage auf einer Platte (5, 12, 19) mit einer Führung (6, 13, 20) anordnet, die so beschaffen ist, daß sie ihnen eine geometrische Anordnung kristallographischer Art mit einer Elementarzelle in Form eines gleichseitigen Dreiecks, eines Quadrats oder eines Rhombus vermittelt, wobei jede Kugel im Innern der Lage mit 6 oder 4 anschließenden Kugeln in Kontakt ist,

– daß man auf die besagten Kugeln ein Bindemittel in flüssigem Anfangszustand aufträgt, das so beschaffen ist, daß es sich zwischen :

. dem besagten flüssigen Anfangszustand, in dem die Viskosität und die Benetzbarkeit in bezug auf die Kugeln dem besagten Bindemittel gestatten, auf diese zu fließen und sich in den Kontaktzonen zwischen den Kugeln zu setzen, so daß Menisken entstehen,

. und einem stabilen flexiblen Zwischenzustand, in dem es in bezug auf die Kugeln Haftungsmerkmale aufweist, entwickelt,
– daß man nach Bildung der flüssigen Menisken zwischen den in Kontakt befindlichen Kugeln das Bindemittel von seinem Anfangszustand in seinen Zwischenzustand entwickeln läßt, so daß flexible und stabile Menisken, die an den besagten Kugeln haften, entstehen.

24. Herstellungsverfahren nach Anspruch 23, dadurch gekennzeichnet, daß man ein Bindemittel wählt,
– bei dem ein flüssiger Anfangszustand eine Viskosität zwischen 4 und 400 Centipoise und eine einem Kontaktwinkel zwischen 30° und 60° entsprechende Benetzbarkeit in bezug auf die Kugeln aufweist,
– bei dem ein flexibler plastischer Zwischenzustand so beschaffen ist, daß in bezug auf die Kugeln Haftkräfte zwischen 1 und 10 Dekanewton pro cm² entwickelt werden.

25. Verfahren nach einem der Ansprüche 23 oder 24, dadurch gekennzeichnet, daß man ein in seinem Anfangszustand aus einem flüssigen Gemisch von flüchtigem Lösungsmittel, in heißem Zustand sublimierbarer Verbindung und Lötpulver bestehendes Bindemittel aufträgt und nach Bildung der Menisken für die Verdampfung des Lösungsmittels bei niedriger Temperatur sorgt, um in dem Zwischenzustand des Bindemittels flexible plastische Menisken zu erzielen, die so beschaffen sind, daß sie sich durch nachträgliche Wärmebehandlung zu einem starren Endzustand entwickeln.

26. Herstellungsverfahren nach einem der Ansprüche 23, 24 oder 25, um ein Produkt mit ebener Anordnung kristallographischer Art mit einer Elementarzelle in der Form eines gleichseitigen Dreiecks (T) zu erzielen, dadurch gekennzeichnet, daß man die Kugeln auf einer auf einen Rand zu geneigten Platte (5) anordnet, mit einer Linearführung entlang dieses Randes, die durch eine Reihe von Positionierstutzen (6a) gebildet ist, wobei diese im wesentlichen um einen Wert e = 1,73 D voneinander entfernt sind, wobei D der Kugeldurchmesser ist.

27. Herstellungsverfahren nach einem der Ansprüche 23, 24 oder 25, um ein Produkt mit ebener Anordnung kristallographischer Art mit einer quadratischen Elementarzelle (R) zu erzielen, dadurch gekennzeichnet, daß man die Kugeln auf einer geneigten Platte (12) mit einer Flächenführung anordnet, die aus einem Netzwerk von parallelen Positionierstäben (13) besteht, wobei diese im wesentlichen um einen dem Kugeldurchmesser entsprechenden Wert voneinander entfernt sind.

28. Herstellungsverfahren nach einem der Ansprüche 23, 24 oder 25, um ein Produkt mit ebener Anordnung kristallographischer Art mit einer Elementarzelle in der Form eines Rhombus (L) zu erzielen, dadurch gekennzeichnet, daß man die Kugeln auf einer auf einen Rand zu geneigten Platte (19) anordnet, wobei diese entlang des besagten Randes eine durch eine Reihe von Positionierstutzen (20a) gebildete Linearführung aufweist, und zwar sind die besagten Stutzen um einen Wert g = 1,63 D voneinander entfernt, wobei D der Kugeldurchmesser ist.

29. Herstellungsverfahren nach einem der Ansprüche 23 bis 28, bei dem das Bindemittel in seinem Anfangszustand durch Aufspritzen auf die auf der Platte angeordneten Kugeln aufgetragen wird.

30. Herstellungsverfahren nach einem der Ansprüche 23 bis 28, bei dem das Bindemittel in seinem Anfangszustand mit einer Spritze in die Zwischenräume zwischen den auf der Platte angeordneten Kugeln eingeführt wird.

31. Herstellungsverfahren nach einem der Ansprüche 23 bis 28, bei dem das Bindemittel in seinem Anfangszustand auf die auf der Platte angeordneten Kugeln aufgetragen wird.

32. Herstellungsverfahren nach einem der Ansprüche 23 bis 31, dadurch gekennzeichnet, daß die Kugeln auf einer Platte angeordnet sind, die mindestens eine volle erhöhte Zone (8) besitzt, um den Raum einer vorbestimmten Anzahl von Kugeln zu besetzen und während der Anordnung der besagten Kugeln in der Lage mindestens eine Leerzone ($Z_1$, $Z_2$) ohne Kugeln zu bilden.

33. Herstellungsverfahren nach Anspruch 32, dadurch gekennzeichnet,
– daß die Kugeln (2) auf einer Platte mit mindestens einer vollen erhöhten und rückziehbaren Zone (8) angeordnet sind,
– daß man Bindemittel in seinem Anfangszustand auf die so angeordneten Kugeln aufträgt und das besagte Bindemittel zur Entwicklung in seinen Zwischenzustand bringt,
– daß die besagte erhöhte Zone oder die besagten erhöhten Zonen (8) dann zurückgezogen werden,
– daß andere Kugeln (3) mit im wesentlichen gleichen Außendurchmessern und anderen Merkmalen in einer oder mehreren der auf diese Weise freigelassenen Zonen angeordnet werden,
– daß man wieder Bindemittel in seinem Anfangszustand auf die auf diese Weise neu angeordneten Kugeln aufträgt und dazu bringt, sich in seinen Zwischenzustand zu entwickeln.

34. Vorrichtung zur Herstellung eines modularen Produkts nach dem in Anspruch 23 beschriebenen Verfahren, dadurch gekennzeichnet, daß es eine geneigte Platte (5, 19) mit entlang der niedrigsten Seite einer linearen Randführung (6, 7; 20, 21), die in der Lage ist, eine Reihe von Kugeln gemäß einer vorbestimmten linearen Verteilung anzuordnen, einen oberhalb diese Platte befindlichen Kugelspender und Aufspritzmittel umfaßt, die es gestatten, ein Bindemittel oberhalb der auf der Platte angeordneten Kugeln aufzuspritzen.

35. Vorrichtung zur Herstellung eines modularen Produkts nach dem in Anspruch 23 beschriebenen Verfahren, dadurch gekennzeichnet, daß es eine Platte (12) mit einer ein Oberflächennetzwerk (13, 14, 15) bildenden Führung, die in der Lage ist, eine Kugelschicht gemäß einer vorbestimmten ebenen Verteilung anzuordnen, einen oberhalb der Platte befindlichen Kugelspender und Aufspritzmittel umfaßt, die Aufspritzen eines Bindemittels oberhalb der auf der Platte angeordneten Kugeln gestatten.

## Claims

1. Process for manufacturing an alveolar material, consisting:

. in the use of intermediary products each constituted by a deformable sheet of spheres (2, 10, 17) of substantially equal diameters, distributed geometrically according to a level arrangement in a single layer of crystallographic type with a unit cell in the shape of an equilateral triangle, a square or a rhombus, where each sphere present at the core of the sheet is in contact with 6 or 4 adjacent spheres, said spheres being joined to one another in the proximity of their contact zones by menisci (4, 11, 18) consisting of a flexible binder which adheres to the spheres and simultaneously confers to the sheet cohesion of assembly and a stable deformable character, so as to enable small displacements of the spheres in relation to one another without separation of the latter,

. in applying a first deformable sheet to a mould (24) in accordance with the alveolar material aimed at, so as to cause the sheet to assume the shape of said mould,

. in applying to said first sheet a second deformable sheet so as to make the spheres of said second sheet contact those of the first sheet and, if required, to superimpose, in analogous manner, other deformable sheets in order to obtain a spatial arrangement of crystallographic type of the spheres pertaining to the different sheets,

. and in mutually fixing the contacting spheres pertaining to adjacent sheets.

2. Process according to claim 1, characterised in that use is made of modular intermediary products with a binder consisting of a mixture of a compound capable of sublimation in the hot state and a brazing powder, in that the various modular products are superimposed, a brazing product being positioned between the sheets, and in that one subjects the stack to a thermal treatment so designed as to cause the compound capable of sublimation to sublimate as well as fusion of the powder and the brazing product.

3. Process according to claim 1, characterised in that use is made of intermediary modular products with a binder soluble in a solvent, as well as of spheres having a superficial layer consisting of a brazing material, in that one superimposes the modular products and subjects the stack to the action of a solvent so as to dissolve the binder, whereupon a thermal treatment so designed as to cause fusion of the brazing material is applied.

4. Process according to claim 1, characterised in that use is made of intermediary modular products with a binder consisting of a resin capable of being polymerised in the hot state, in that one superimposes the different modular products, interposing a binder of the same type between the sheets, and in that one subjects the stack to a thermal treatment so designed as to cause the polymerisation of the binder.

5. Process according to one of claims 1, 2, 3 or 4, characterised in that :

– use is made of modular products in which the spheres (2) of the sheet are geometrically distributed according to a level arrangement of crystallographic type with a unit cell in the shape of an equilateral triangle (T), in which each sphere present at the core of the sheet is in contact with 6 adjacent spheres,

– one superimposes the modular products in coincident manner so that each sphere pertaining to a sheet comes to be located between two spheres of the two adjacent sheets, there being one point of contact with each of said spheres, with a view to forming a spatial arrangement of simple hexagonal crystallographic type.

6. Process according to one of claims 1, 2, 3 or 4, characterised in that :

– use is made of modular products (22, 23) in which the spheres (2) of the sheet are geometrically distributed in accordance with a level arrangement of crystallographic type, with a unit cell in the shape of an equilateral triangle (T), where each sphere present at the core of the sheet is in contact with 6 adjacent spheres,

– one superimposes the modular products in offset manner so that each sphere $(B_1)$ of a sheet comes to be located between six spheres of the two adjacent sheets (three spheres, $B_2$, $B_3$, $B_4$, pertaining to one, and three spheres $B_5$, $B_6$, $B_7$, pertaining to the other sheet), there being a point of contact with each of the said six spheres, with a view to forming a spatial arrangement of close-packed hexagonal crystallographic type.

7. Process according to one of claims 1, 2, 3 or 4, characterised in that :

– use is made of modular products in which the spheres (10, 17) of the sheet are distributed geometrically in accordance with a level arrangement of crystallographic type, with a unit cell in the shape of a square (R) where each sphere present at the core of the sheet is in contact with 4 adjacent spheres,

– one superimposes the modular products in coincident manner so that each sphere (B′₁) of a sheet comes to be located between two spheres (B′₂, B′₃) of the two adjacent spheres, there being one contact point with each of said spheres, with a view to forming a spatial arrangement of simple cubic crystallographic type.

8. Process according to one of claims 1, 2, 3 or 4, characterised in that :

– use is made of modular products in which the spheres (10, 17) of the sheet are distributed geometrically in accordance with a level arrangement of crystallographic type, with a cell unit in the shape of a rhombus (L), where each sphere present at the core of the sheet is in contact with 4 adjacent spheres,

– one superimposes the modular products in offset manner so that each sphere (B″₁) of a given sheet comes to be located between four spheres of two adjacent sheets (two, B″₂, B″₃ of one, and two, B″₄, B″₅, of the other sheet), there being one point of contact with each of the four spheres, with a view to forming a spatial arrangement of cubic body-centred crystallographic type.

9. Process according to one of claims 1 to 8, in which use is made of intermediary modular products with a binder soluble in a solvent, characterised in that each modular product is first cut out in accordance with the shape of the material to be manufactured, by projecting on the sheet of modular product a directional jet of solvent along an appropriate contour while detaching the parts of the sheet at the level of the menisci thus liquefied.

10. Process according to one of claims 1 to 9, in which use is made of intermediary modular products with at least one vacant zone without spheres, in that one superimposes these products so as to superimpose their vacant zone, in that one includes in the latter an insert (S) of a shape corresponding to the vacant space so as to arrange it in contact with the spheres located at the edge of said space, and in that one fixes said insert and said spheres by their zones of contact.

11. Modular intermediary product specially designed for bringing about the process according to one of claims 1 to 10, consisting in a sheet of spheres (2, 10, 17) of substantially equal diameters, distributed geometrically according to a level arrangement with a single layer of crystallographic type, with a unit cell in the shape of an equilateral triangle, a square or a rhombus, where each sphere present at the core of the sheet is in contact with 6 or 4 adjacent spheres, said spheres being joined to one another in the proximity of their zones of contact by menisci (4, 11, 18), characterised in that the menisci between the spheres are formed by a flexible binder adhering to the spheres and at the same time conferring to the sheet a cohesion of assembly and a stable deformable character, so as to enable small displacements of the spheres in relation to one another without separation of the latter when said sheet is caused to assume a shape depending on the required alveolar material.

12. Modular product in sheet form according to claim 11, characterised in that the flexible binder between the spheres is a flexible binder with plastic properties.

13. Modular product in sheet form according to claim 12, characterised in that the flexible binder between the spheres is a compound capable of being sublimated in the hot state.

14. Modular product in sheet form according to claim 12, characterised in that the flexible binder between the spheres is a mixture of a compound capable of sublimation in the hot state and a brazing powder.

15. Modular product in sheet form according to claim 12, characterised in that the flexible binder between the spheres is a compound soluble in a solvent, each sphere (10) having a superficial layer consisting of a brazing material.

16. Modular product in sheet form according to claim 12, characterised in that the flexible binder between the spheres is a resin capable of polymerisation in the hot state.

17. Modular product in sheet form according to one of claims 11 to 16, in which the spheres (2) of the sheet are distributed geometrically in accordance with a level arrangement of crystallographic type, with a unit cell in the shape of an equilateral triangle (T), where each sphere present at the core of the sheet is in contact with 6 adjacent spheres.

18. Modular product in sheet form according to one of claims 11 to 16, in which the spheres (10, 17) of the sheet are distributed geometrically in accordance with a level arrangement of crystallographic type, with a unit cell in the shape of a square (R) or a rhombus (L), where each sphere present at the core of the sheet is in contact with 4 adjacent spheres.

19. Modular product in sheet form according to one of claims 11 to 18, in which each sphere comprises a continuous, self-supporting skin formed by at least one layer consisting of a material pertaining to the following group: metal, metal alloy, ceramic, synthetic material or composite material.

20. Modular product in sheet form according to one of claims 11 to 19, in which the spheres are hollow and have an outer diameter between 0.1 mm and 20 mm.

21. Modular product in sheet form according to one of claims 11 to 20, characterised in that the sheet of spheres has at its core at least one vacant zone (Z₁, Z₂) without any spheres.

22. Modular product in sheet form according to one of claims 11 to 21, characterised in that it comprises, applied to each face of the sheet, a removable protection sheet (27).

23. Process for manufacturing a modular product according to one of claims 11 to 22, consisting in making use of spheres of substantially equal diameter, characterised in that :

– one positions said spheres in a single layer on a plate (5, 12, 19) with a grid (6, 13, 20) capable of imposing on them a geometric arrangement of crystallographic type, with a unit cell in the shape of an equilateral triangle, a square or a rhombus, where each sphere at the core of the layer is in contact with 6 or 4 adjacent spheres,

– one deposits on said spheres a binder in an initially liquid state, capable of evolving between :

. said initial liquid state, where its viscosity and wetting capacity in relation to the spheres enable it to flow on to the latter and to set within the zones of contact between the spheres so as to form menisci,

. and a flexible and stable intermediary state, where it possesses properties of adhesion in respect of the spheres,

– so as to cause, after formation of liquid menisci between spheres in contact, the binder to evolve from its initial state towards its intermediary state in such a way that stable, flexible menisci are formed, which adhere to said spheres.

24. Manufacturing process according to claim 23, characterised in that one chooses a binder with :

– an initial state in which the viscosity amounts to between 4 and 400 centipoise and the wetting capacity in respect of the spheres corresponds to a contact angle between 30° and 60°,

– a flexible and plastic intermediary state, so designed as to develop forces of adhesion in respect of the spheres amounting to between 1 and 10 decanewtons per cm$^2$.

25. Process according to one of claims 23 or 24, characterised in that one deposits a binder consisting, in its initial state, in a liquid mixture of volatile solvent so composed as to be capable of sublimation in the hot state and brazing powder, and in that, after formation of the menisci, one ensures evaporation of the solvent at low temperature so as to bring about, in the intermediary state of the binder, flexible plastic menisci capable of evolving, as a result of subsequent thermal treatment, towards a rigid final state.

26. Manufacturing process according to one of claims 23, 24 or 25, with a view to bringing about a product with a level arrangement of crystallographic type, with a unit cell in the shape of an equilateral triangle (T), characterised in that one places the spheres on a plate (5) inclined towards one edge and comprising along said edge a linear grid consisting of a row of positioning studs (6a), substantially distant from one another by a value e = 1.73 D, where D is the diameter of the spheres.

27. Manufacturing process according to one of claims 23, 24 or 25, with a view to bringing about a product with a level arrangement of crystallographic type, with a square unit cell (R), characterised in that one arranges the spheres on an inclined plate (12) comprising a surface grid formed by a network of parallel positioning strips (13), substantially distant by a value corresponding to the diameter of the spheres.

28. Manufacturing process according to one of claims 23, 24 or 25, with a view to bringing about a product with a level arrangement of crystallographic type, with a unit cell in the shape of a rhombus (L), characterised in that one arranges the spheres on a plate (19) inclined towards one edge and comprising along said edge a linear grid constituted by a row of positioning studs (20a), substantially distant from one another by a value g = 1.63 D, where D is the diameter of the spheres.

29. Manufacturing process according to one of claims 23 to 28, in which the binder is applied in its initial state by projection on to the spheres located on the plate.

30. Manufacturing process according to one of claims 23 to 28, in which the binder is applied, by means of a syringe, in its initial state within the spaces between the spheres located on the plate.

31. Manufacturing process according to one of claims 23 to 28, in which the binder is applied in its initial state by coating the spheres located on the plate.

32. Manufacturing process according to one of claims 23 to 31, characterised in that the spheres are placed on a plate having at least one complete raised zone (8), with a view to occupying the space of a selected number of spheres and forming, in the course of placing said spheres, at least one vacant zone ($Z_1$, $Z_2$) without spheres.

33. Manufacturing process according to claim 32, characterised in that :

– the spheres (2) are placed on a plate having at least one complete raised zone capable of being retracted (8),

– one deposits binder in its initial state on to the spheres thus placed and causes it to evolve towards its intermediary state,

– the raised zone or zones (8) are then retracted,

– other spheres (3) of substantially identical external diameters and with different characteristics are placed within a zone or zones thus left vacant,

– one again deposits binder in the initial state on to the spheres thus newly placed and causes said binder to evolve towards its intermediary state.

34. Device for manufacturing a modular product according to the process specified in claim 23, characterised in that it comprises an inclined plate (5, 19) endowed, along its lowest side, with a linear edge grid (6, 7; 20, 21) capable of positioning a row of spheres in accordance with the predetermined linear distribution, a sphere feeder situated above the plate and projection means enabling the projection of a binder above the spheres located on the plate.

35. Device for manufacturing a modular product according to the process specified in claim 23, characterised in that it comprises a plate (12) endowed on its surface with a grid constituting a surface network (13, 14, 15) capable of positioning a sheet of spheres according to a predetermined level distribution, a sphere feeder situated above the plate and projection means enabling binder to be projected above the spheres located on the plate.

Fig. 1

Fig. 2

Fig. 3

Fig. 4

Fig. 5

Fig. 6

Fig. 7

Fig. 8

Fig. 9

Fig. 10

Fig. 11

22

Fig. 12

Fig. 13

Fig. 14

Fig. 15

Fig. 16

Fig. 17

$B_2$ $B_3$ $B_4$

$B_5$ $B_6$ $B_1$ $B_7$

Fig. 18

$B_2$ $B_3$ $B_4$

$B_1$

$B_5$ $B_6$ $B_7$

Fig. 19

$B'_3$

$B'_1$ $B'_2$

Fig. 20

$B'_3$

$B'_1$

$B'_2$

25

Fig. 21

Fig.22

Fig. 23

26